# FASCICULE DE BREVET EUROPEEN

(11) **EP 2 598 785 B1**
(45) Date de publication et mention de la délivrance du brevet: **30.09.2015**
(21) Numéro de dépôt: 11754449.4
(22) Date de dépôt: 19.07.2011
(51) Int. Cl.: F16L 23/08

(54) **SYSTEME DE SERRAGE POUR LE RACCORDEMENT ET LE PRE-MONTAGE D'UN PREMIER ET D'UN DEUXIEME TUBE**
KLEMMSYSTEM ZUR VERBINDUNG UND VORMONTAGE EINES ERSTEN UND ZWEITEN ROHRS
CLAMPING SYSTEM FOR CONNECTING AND PRELIMINARILY MOUNTING A FIRST AND A SECOND TUBE

(30) Priorité: 27.07.2010 FR 1056175
(43) Date de publication de la demande: 05.06.2013
(73) Titulaire: Etablissements Caillau, 92130 Issy-les-Moulineaux (FR)
(72) Inventeur: RIGOLLET, Nicolas, F-41200 Romorantin Lanthenay (FR)
(74) Mandataire: Intès, Didier Gérard André
(86) Numéro de dépôt international: PCT/FR2011/051743
(87) Numéro de publication internationale: WO 2012/013891

(56) Documents cités:
- EP-A1- 1 451 498
- CA-A1- 2 117 216
- US-A1- 2005 099 001
- US-A1- 2005 253 380
- US-A1- 2008 185 841

## Description

La présente invention concerne un système de serrage pour le raccordement d'un premier et d'un deuxième tube dont les extrémités en regard présentent des surfaces d'appui faisant saillie par rapport à la surface extérieure cylindrique desdits tubes, le système comprenant un collier et une rondelle, le collier comportant une bande apte à coopérer avec lesdites surfaces d'appui par sa périphérie intérieure délimitant un renfoncement dans lequel les surfaces d'appui peuvent être insérées et des moyens pour serrer ladite bande, la rondelle étant solidarisée avec le collier par des moyens de fixation, le système comprenant des premiers moyens de pré-montage pour, à l'état non serré du collier, solidariser ledit collier avec le premier tube lorsque la surface d'appui dudit premier tube est engagée dans le renfoncement.

Un système de serrage de ce type est connu par le brevet européen n° EP 1 451 498. La section de la bande du collier est par exemple sensiblement en forme de V ou de U, de façon que les ailes formées par cette section prennent respectivement appui sur la surface d'appui du premier tube et sur celle du deuxième tube. Ainsi, le serrage du collier tend à maintenir les tubes serrés l'un contre l'autre. La section en forme de V est intéressante dans la mesure où, lors du serrage du collier, elle rapproche les tubes l'un de l'autre.

Les moyens de serrage de la bande comprennent par exemple un système à vis. Ainsi, les extrémités de la bande peuvent être redressées de manière à former des pattes d'appui munies de perçage dans lesquelles peut être insérée une vis. Un écrou est disposé derrière l'une de ces pattes de telle sorte que la rotation de la vis entraîne le serrage du collier. Toutefois, d'autres moyens de serrage peuvent être prévus, par exemple du type fonctionnant par accrochage, en particulier du type comprenant un crochet redressé par rapport à la bande et une oreille également redressée par rapport à la bande, le crochet s'accrochant derrière l'oreille pour maintenir le collier à l'état serré.

La rondelle du système de serrage peut en particulier servir à assurer une étanchéité du raccordement entre les deux tubes, en présentant à cet effet une portion d'étanchéité qui, lorsque le système est serré sur les tubes, est prise entre deux surfaces d'étanchéité, appartenant respectivement au premier et au deuxième tube.

Dans EP 1 451 498, la rondelle est solidarisée au collier grâce à des pattes de fixation que comporte cette rondelle et l'ensemble du système de serrage peut être maintenu pré-monté sur le premier tube, grâce à des pattes de pré-montage que comporte la rondelle. Ainsi, pour assembler les deux tubes, on peut pré-monter le système de serrage sur le premier tube et rapprocher le deuxième tube de ce premier tube, avant de serrer le collier. Cette possibilité de pré-monter le système de serrage sur le premier tube constitue, dans EP 1 451 498, un avantage notable par rapport à l'art antérieur pré-existant, en ce qu'il simplifie l'assemblage des tubes et leur raccordement par serrage du collier.

Toutefois, cet assemblage nécessite, d'une part, que le deuxième tube soit maintenu en position par rapport à l'ensemble constitué par le premier tube et par le système de serrage pré-monté sur ce premier tube et, d'autre part, que le serrage du collier soit effectué par la manipulation appropriée. Concrètement, lorsque l'assemblage est réalisé à la main, ceci signifie que l'opérateur doit, d'une part, maintenir le deuxième tube en position avec l'une de ses mains et, d'autre part, réaliser le serrage avec l'autre main. Il doit donc parfaitement synchroniser ces mouvements et, si le serrage n'est pas aisé à réaliser, il ne peut pas lâcher le deuxième tube pour parfaire le serrage.

La demande de brevet CA 2117216 divulgue un dispositif de raccordement de deux tubes lisses, utilisant des flasques fixés aux extrémités des tubes et un collier dont la bande présente un renfoncement dans lequel les surfaces d'appui des flasque se logent, une rondelle d'étanchéité étant située au fond du renfoncement.

La demande de brevet US 2008/0185841 divulgue un dispositif de raccordement entre un tube ayant une extrémité en boule et un autre tube ayant un extrémité évasée, le dispositif comprenant un collier dont la bande présente un renfoncement dans lequel se logent les extrémités des tubes, cette bande pouvant comprendre un clip ayant des doigts qui prennent appui derrière la boule de l'extrémité du premier tube.

La demande de brevet US 2005/0099001 divulgue un système de serrage de deux tubes ayant chacun un bouton saillant, à l'aide d'un collier dont les bords ont des encoches de réception de ces boutons, le collier portant un clip qui s'accroche derrière les boutons reçus dans les encoches.

La demande de brevet US 2005/0253380 divulgue un système de raccordement de deux tubes ayant des extrémités évasées, le système comprenant un collier dont la bande présente un renfoncement dans lequel se loge une rondelle en élastomère qui prend appui sur les extrémités évasées des tubes et qui présente une portion centrale d'étanchéité venant s'insérer entre les extrémités libres des tubes.

Il existe un besoin d'améliorer encore le système de serrage de EP 1 451 498, pour remédier aux inconvénients précités et, en particulier, pour permettre qu'il ne soit plus nécessaire de tenir le deuxième tube pour le maintenir en position tout en réalisant le serrage.

Ce but est atteint grâce aux caractéristiques de la revendication 1.

Ainsi, avec le système de serrage de l'invention, le deuxième tube peut être mis en position et retenu à l'état pré-monté grâce aux deuxièmes moyens de pré-montage. L'opérateur peut donc réaliser le serrage en activant les moyens de serrage, sans devoir, en même temps, maintenir lui-même les tubes l'un contre l'autre.

La rondelle sert au pré-montage, sur l'un et/ou l'autre tube, sans qu'il ne soit nécessaire de doter le collier ou les tubes de configurations très particulières.

La rondelle est en général réalisée en métal, par emboutissage, découpe et pliage. Dans la fabrication de la rondelle, il est aisé de réaliser sur cette dernière des pattes qui constituent des premières pattes de pré-montage et/ou des deuxièmes pattes de pré-montage et/ou des pattes de fixation.

Les moyens de fixation, les premiers moyens de pré-montage et les deuxièmes moyens de pré-montage sont solidaires de la rondelle, de sorte que la rondelle réalise à elle seule les premiers et les deuxièmes moyens de pré-montage.

Avantageusement, la rondelle comprend une portion annulaire d'étanchéité, apte à être prise entre une première et une deuxième surface d'étanchéité appartenant respectivement au premier et au deuxième tube, lorsque ces derniers sont serrés à l'aide du système de serrage.

Avantageusement, la rondelle présente une portion sensiblement tronconique.

Comme on le verra dans la suite, il est avantageux que les tubes coopèrent entre eux par l'intermédiaire de surfaces tronconiques, et la rondelle est alors adaptée à cette forme de coopération.

Avantageusement, la rondelle présente une portion interne s'étendant sensiblement axialement.

Dans ce cas, avantageusement, la portion interne s'étend à partir d'un bord interne de la portion sensiblement tronconique en formant un retour.

La portion interne sensiblement axiale peut servir à "couvrir" l'espace ménagé sous la surface d'appui du deuxième tube, comme dans FR 2 906 864. Selon sa position, elle peut également servir à centrer le deuxième tube lors de son pré-montage par rapport à l'ensemble constitué par le premier tube et le système de serrage.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- les figures 1A et 1B sont des une vues en coupe axiale du système de serrage selon l'invention, pré-monté sur un premier et sur un deuxième tube devant être raccordés ;
- la figure 2 est une vue en éclaté, montrant le système de serrage comprenant le collier de serrage et une rondelle, séparés l'un de l'autre, et montrant également les premier et deuxième tubes ;
- la figure 3 est une vue en perspective montrant le système de serrage pré-monté sur le premier tube ;
- la figure 4 est une vue en perspective correspondant à celle de la figure 3, sur laquelle le deuxième tube est également pré-monté ;
- la figure 5 est une vue en perspective correspondant à celles des figures 3 et 4, après le serrage du collier, les deux tubes étant alors raccordés ;
- les figures 6, 7A, 7B et 7C sont des vues en perspective montrant une rondelle utilisable dans le mode de réalisation des figures 1 à 5 ;
- la figure 8A montre, en coupe axiale, un système de serrage utilisant la rondelle de la figure 7B, monté sur deux tubes ainsi raccordés à l'aide de ce système de serrage ;
- la figure 8B est une vue analogue à la figure 1A, avec un système de serrage utilisant la rondelle de la figure 7C.
- la figure 9 est une vue analogue à la figure 1A, pour un autre mode de réalisation utilisant une rondelle supplémentaire qui n'est pas revendiqué ;
- la figure 10 est une vue en perspective de la rondelle supplémentaire ; et
- la figure 11 est une vue de côté de la rondelle supplémentaire.

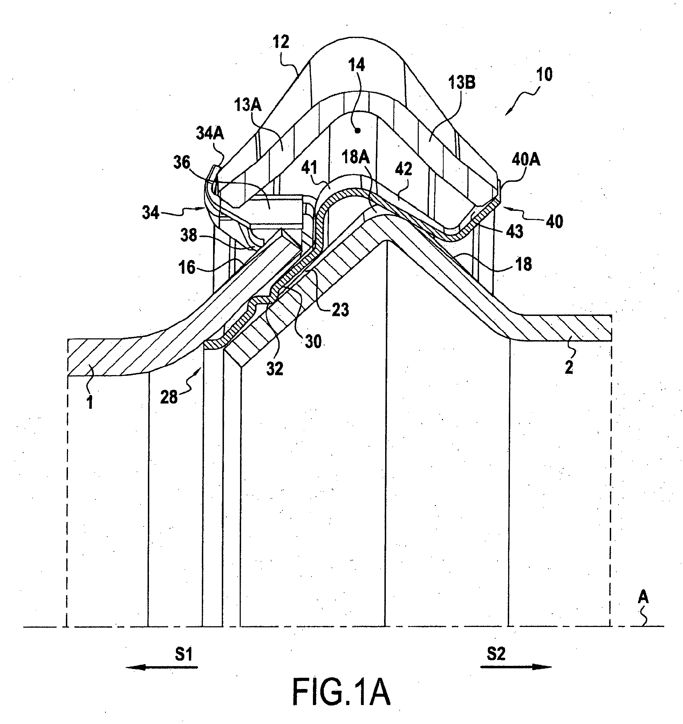

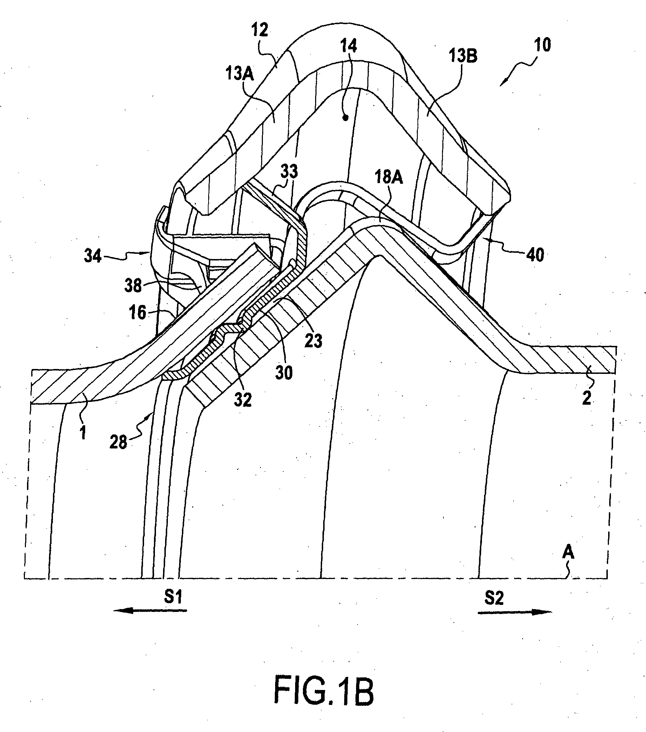

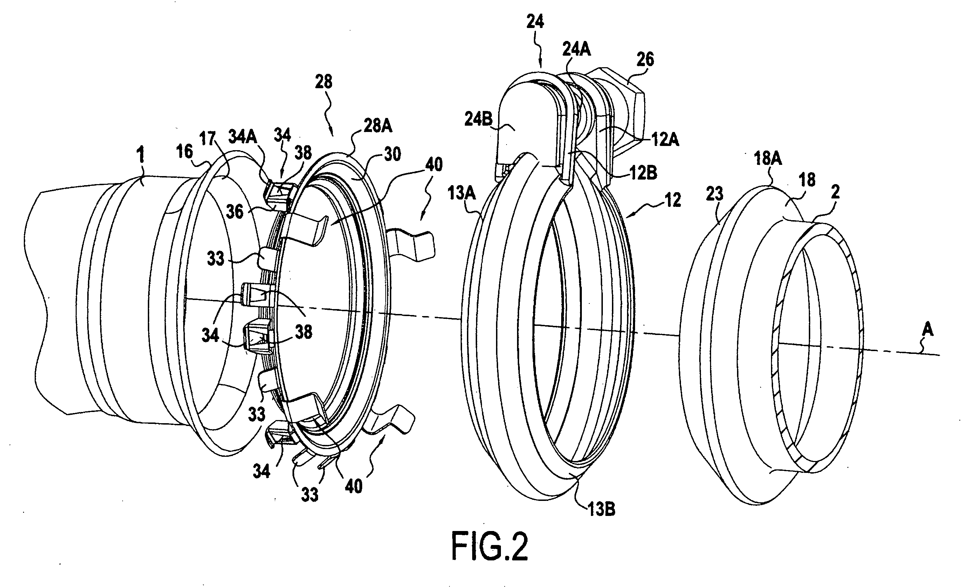

On décrit tout d'abord les figures 1A, 1B et 2. On voit sur ces figures que le système de serrage comprend un collier 10, globalement du même type que celui que décrit EP 1 451 498 et une rondelle 28, qui coopèrent pour assembler deux tubes 1 et 2.

Dans toute la suite, on qualifiera de « internes » les éléments qui sont dirigés vers l'axe A des deux tubes mis en bout à bout ou qui sont les plus proches de cet axe A par rapport à d'autres éléments qualifiés de « externes », les éléments « externes » étant également ceux qui sont dirigés à l'opposé de l'axe A.

Le collier comporte une bande 12 qui, comme on le voit sur les figures 1A et 1B, a une périphérie interne qui délimite un renfoncement 14 dans lequel des surfaces d'appui, respectivement. 16 appartenant au premier tube 1, et 18 appartenant au deuxième tube 2 peuvent être insérées. Ce renfoncement et ces surfaces d'appui ont des formes telles que le serrage de la bande du collier contraint les extrémités des tubes à se rapprocher l'une de l'autre. Ainsi, la bande 12 présente en section avantageusement une forme en V, tandis que les surfaces d'appui 16 et 18 ont un diamètre qui augmente graduellement vers les extrémités libres en regard des tubes, et sont par exemple de forme tronconique. La bande 12 présente des extrémités, respectivement 12A et 12B, qui sont redressées sensiblement radialement de manière à former des pattes d'appui. Ces pattes sont percées de manière à permettre le passage de la tige 24A d'une vis 24 à travers ces pattes. La tête 24B de la vis est calée par rapport à l'une des pattes d'appui, en l'espèce la patte 12B, tandis qu'un écrou 26 est retenu par rapport à l'autre patte d'appui 12A. On comprend que la rotation de l'écrou dans le sens du vissage rapproche les pattes d'appui l'une de l'autre et réduit donc le diamètre intérieur du collier, c'est-à-dire qu'elle permet de serrer la bande.

Le système de serrage comprend également la rondelle 28, qui est solidarisée avec le collier. Cette rondelle présente une portion annulaire tronconique 30 qui, comme le voit sur les figures 1A et 1B, peut s'insérer entre les extrémités en regard des deux tubes lorsqu'ils sont serrés à l'aide du système de serrage.

A cet égard, il convient de relever que l'extrémité du tube 1 est une extrémité femelle, sa périphérie interne présentant un évasé. En revanche, l'extrémité du tube 2 est une extrémité mâle qui, au-delà de la surface d'appui 18, présente une périphérie extérieure 23 dont le diamètre va en diminuant vers l'extrémité libre. La partie d'extrémité ainsi formée peut donc s'insérer, sensiblement avec complémentarité de forme, à l'intérieur de l'évasé 17 formé à l'extrémité libre du tube 1. La portion tronconique 30 de la rondelle 28 est située entre l'évasé 17 et la périphérie extérieure 23 de l'extrémité libre du tube 2. La portion tronconique 30 de la rondelle 28 présente des déformations annulaires 32 formant jonc d'étanchéité. L'évasé 17 formé à la périphérie interne de l'extrémité libre du tube 1, et la périphérie externe de la partie d'extrémité 23 du tube 2 forment donc des surfaces d'étanchéité qui, lorsque le système de serrage est serré, prennent entre elles la portion tronconique 30 de la rondelle et pressent le jonc d'étanchéité 32, de sorte que l'étanchéité de la liaison entre les tubes est assurée.

La fixation de la rondelle 28 au collier 10, et le pré-montage de l'ensemble constitué par le collier et la rondelle sur le premier tube peuvent être assurés de la même manière que dans EP 1 451 498, par des pattes de fixation que présente la rondelle.

Ainsi, la rondelle présente une série de pattes internes 33 mieux visibles sur la figure 1B. Lorsque la rondelle est assemblée au collier, ces pattes internes coopèrent avec la périphérie interne de l'une des ailes de la bande 12, en l'espèce l'aile 13A. Ces pattes internes servent à maintenir la rondelle à distance de la périphérie interne de l'aile 13A. Les pattes de fixation comprennent également des pattes externes 34 qui, comme on le voit en particulier sur les figures 1A et 1B, sont suffisamment longues pour parvenir en contact avec le bord interne libre de l'aile 13A. Les pattes internes peuvent être légèrement relevées radialement dans le sens allant vers leurs extrémités libres, de manière à ce que ces extrémités libres viennent plus sûrement en appui contre la périphérie interne de l'aile 13A. En revanche, les pattes externes sont dirigées sensiblement axialement de manière à passer sous le bord interne libre de l'aile 13A. On voit que l'extrémité libre de ces pattes externes 34 est recourbée pour former un crochet 34A qui vient s'accrocher sur la face externe de l'aile 13A.

En l'espèce, ces pattes externes 34 permettent également le pré-montage du système de serrage sur le tube 1. On voit en effet que des languettes 38 sont découpées dans ces pattes externes de manière à avoir des extrémités libres dirigées du côté de la zone de rattachement des pattes externes à la rondelle, en étant orientées radialement vers l'intérieur de manière à pouvoir s'accrocher sur la surface d'appui 16 du tube 1. En quelque sorte, ces languettes 38 forment ainsi des crevés, ménagés dans les portions axiales des pattes externes 34 et repliés vers l'intérieur pour venir s'agripper sur la surface d'appui 16. On pourrait évidemment prévoir que ces languettes 38 d'agrippement soient réalisées sur des pattes externes non pourvues des extrémités libres en crochets 34A.

On remarque encore que les pattes externes présentent, sur leurs bords longitudinaux, des ailes 36 qui sont repliées vers l'intérieur. Ces ailes repliées 36 contribuent à la fixation de la rondelle par rapport au collier et apportent une certaine rigidité aux pattes 34 pour éviter qu'elles ne se déforment trop aisément. Cependant, les pattes de fixation précitées, à savoir les pattes 33 et 34, se déforment lors du serrage pour se plaquer contre la périphérie interne de l'aile 13A de la bande 12 du collier, et, ainsi, ne pas s'opposer au serrage.

Les languettes 38 des pattes externes constituent des premières pattes de pré-montage qui permettent le pré-montage de l'ensemble constitué par la rondelle et le collier sur le premier tube 1. Ainsi, les moyens de fixation et les premiers moyens de pré-montage sont solidaires de la rondelle 28. Dans le mode de réalisation représenté sur les figures 1A à 8B, des deuxièmes moyens de pré-montage, permettant le pré-montage de l'ensemble constitué par le collier et la rondelle sur le deuxième tube, sont solidaires de la rondelle. En effet, les pattes de fixation 33 et 34 qui viennent d'être décrites, ainsi que les premières pattes de pré-montage constituées par des languettes 38 découpées dans les pattes 34, sont situées d'un premier côté de la rondelle dans un premier sens axial S1. En l'espèce, ce premier sens axial est celui qui va, selon l'axe A, en s'éloignant de l'aile 13B de la bande 12 du collier à partir de la jonction de cette aile avec l'aile 13A.

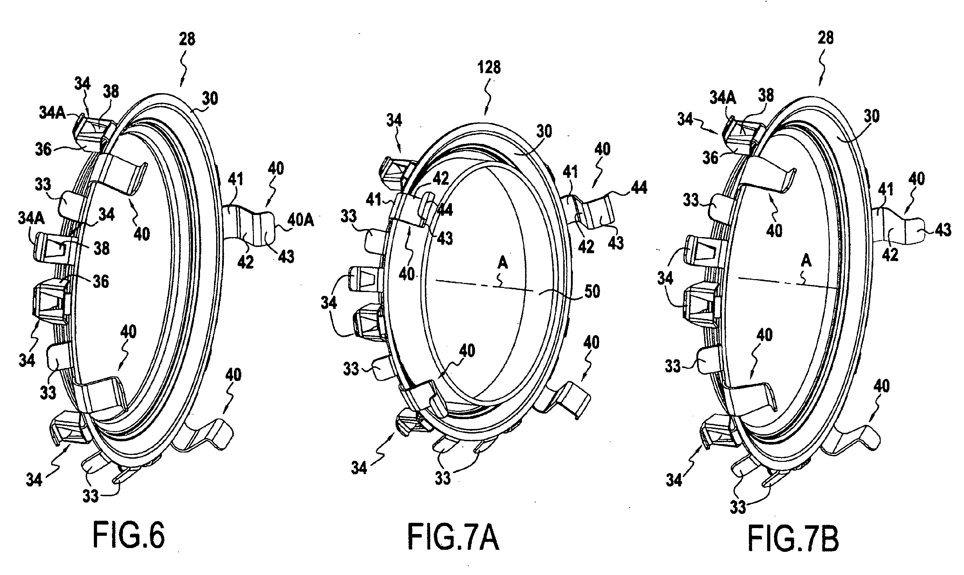

Sur les figures 1A à 8B, les deuxièmes moyens de pré-montage comprennent des deuxièmes pattes de pré-montage 40 qui sont situées d'un deuxième côté de la rondelle, opposé au premier côté, et qui s'étendent en l'espèce dans le sens axial S2 à partir de la périphérie externe 28A de la rondelle. Dans le mode de réalisation représenté, comme on le voit mieux sur la figure 6, ces deuxièmes pattes de pré-montage 40 sont formées par des pattes pré-déformées qui, dans la section axiale représentée sur la figure 1, comprennent un tronçon 41 de rattachement à la rondelle, qui s'étend vers l'extérieur à partir de la rondelle (plus précisément à partir de la périphérie externe 28A de la rondelle), et un tronçon 42 de solidarisation avec le deuxième tube 2 qui s'étend entre le tronçon de rattachement 41 et l'extrémité libre 40A de la patte pré-déformée 40 en étant dirigé vers l'intérieur dans le sens allant vers cette extrémité libre 40A.

On voit encore que chaque patte pré-déformée 40 présente, en outre, un tronçon de retenue 43 qui s'étend entre le tronçon 42 de solidarisation avec le deuxième tube 2 et l'extrémité libre 40A de la patte pré-déformée, en étant dirigé vers l'extérieur dans le sens allant vers cette extrémité libre 40A. On comprend en considérant les figures 1A et 1B que ce tronçon de retenue 43 peut coopérer avec la bande 12 du collier pour retenir la patte pré-déformée 40 par rapport à cette bande. En effet, en l'espèce, le tronçon de retenue 43 est retenu contre le bord interne de la deuxième aile 13B de la bande 12. Dans l'exemple représenté, toutes les deuxièmes pattes de pré-montage sont formées par les pattes pré-déformées qui viennent d'être décrites. Toutefois, on pourrait concevoir que les deuxièmes pattes de pré-montage comprennent au moins une patte pré-déformée du type qui vient d'être décrit, comprenant ou non le tronçon de retenue 43, et d'autres pattes de forme plus simple, en particulier s'étendant sensiblement axialement dans le sens S2 et pouvant être simplement déformées lors de l'insertion de la surface d'appui 18 du deuxième tube dans le renfoncement 14 formé à l'intérieur de la bande 12 du collier. Il est bien entendu avantageux que la rondelle présente au moins deux pattes pré-déformées diamétralement opposées, voire 3 ou 4 pattes pré-déformées disposées à égales distances angulaires les unes des autres, pour centrer le deuxième tube lors de son pré-montage par rapport à l'ensemble constitué par le collier de serrage et la rondelle pré-montée.

Avantageusement, les deuxièmes pattes de pré-montage comprennent au moins une patte dont la largeur est sensiblement constante. En l'espèce, dans la variante représentée sur la figure 6, les deuxièmes pattes de pré-montage comprennent quatre pattes pré-déformées 40 et la largeur l de toutes ces pattes est la même et est sensiblement constante sur toute leur longueur.

C'est également le cas dans la variante représentée sur la figure 7A. Toutefois, la rondelle 128 selon cette variante se distingue de la rondelle 28 qui vient d'être décrite en référence à la figure 6 en deux aspects.

D'une part, les extrémités libres 40A des pattes pré-déformées 40 sont recourbées pour former des crochets 44 qui, lorsque la rondelle 128 est fixée au collier 10, viennent s'accrocher sur la périphérie externe de la deuxième aile 13B de la bande 12 du collier.

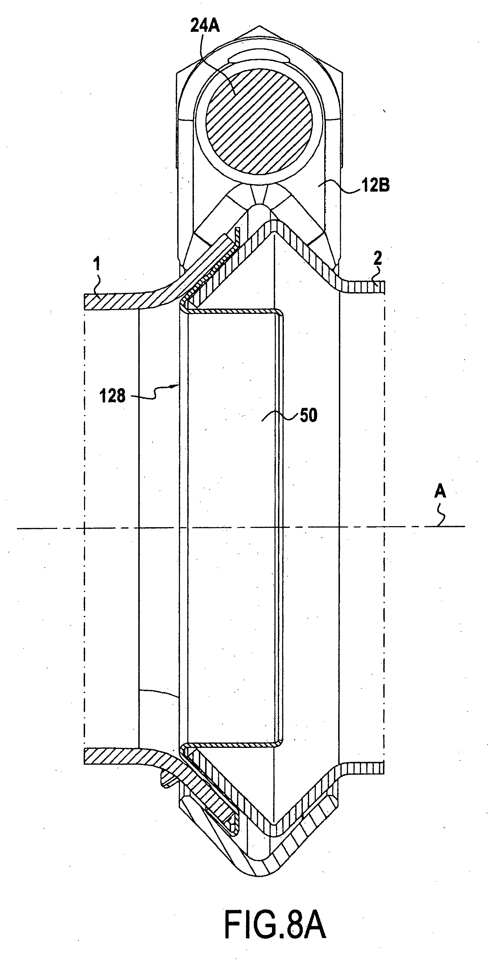

D'autre part, la rondelle 128 présente une portion interne 50 qui s'étend sensiblement axialement. En l'espèce, cette rondelle 128 présente une portion tronconique 30 analogue à celle de la rondelle 28, et la portion interne sensiblement axiale 50 s'étend à partir d'un bord interne de la portion tronconique 30 en formant un retour. Ce retour peut avoir la même fonction que celle divulguée dans FR 2 906 864 et servir à "ponter" la cavité ménagée à l'extrémité du tube 2, sous la surface d'appui 18 et la partie d'extrémité libre tronconique. Par ailleurs, comme on le voit sur la figure 8A, la périphérie externe de la portion interne 50 peut venir coopérer avec le bord libre d'extrémité du deuxième tube 2 pour centrer ce deuxième tube par rapport à la rondelle lors de son pré-montage.

La rondelle représentée sur la figure 7B est analogue à celle de la figure 6, à ceci près que les pattes pré-déformées 40 ont une largeur qui va en diminuant dans le sens allant vers leurs extrémités libres. Ceci permet d'augmenter la flexibilité de ces pattes à mesure que l'on s'approche de leurs extrémités libres, et de faire en sorte que, au voisinage de ces extrémités libres, elles n'occupent qu'une plage angulaire relativement limitée. Bien entendu, on pourrait prévoir que seule l'une des deuxièmes pattes de pré-montage ait une telle largeur allant en diminuant.

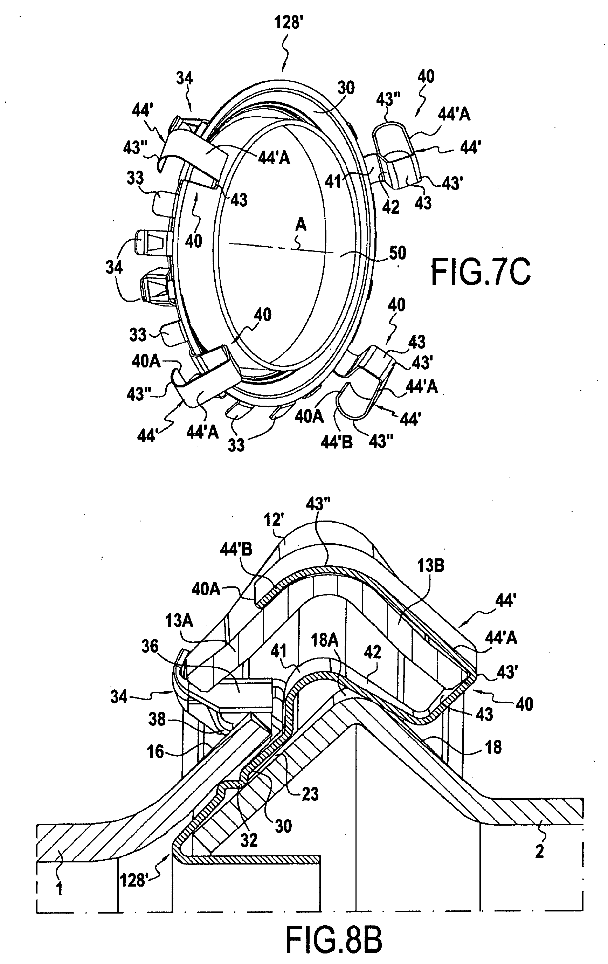

La figure 7C montre une variante de la rondelle de la figure 7A, qui s'en distingue par le fait que les pattes pré-déformées 40 présentent des extrémités libres 40A recourbées de manière à pouvoir coiffer le sommet 12' de la section du collier, ainsi qu'on le voit mieux sur la figure 8B. Plus précisément, la rondelle 128' de la figure 7C diffère de la rondelle 128 de la figure 7A par le fait que les crochets 44' sont prolongés par rapport aux crochets 44 pour, lorsque la rondelle est en place par rapport au collier, venir contre la face externe de l'aile 13B de la bande 12 du collier jusqu'à venir coiffer le sommet 12' de la bande, formé à la jonction des ailes 13A et 13B. Ainsi, les crochets 44' s'accrochent sur le sommet 12', les extrémités libres 40A des pattes pré-déformées 40 étant situées contre la face externe de l'aile 13A de la bande. Les crochets 44' présentent donc des tronçons intermédiaires 44'A recourbés en 43' par rapport aux tronçons de retenue 43 et des tronçons terminaux 44'B, repliés en 43" par rapport aux tronçons intermédiaires 44'A et s'étendant entre ces derniers et les extrémités libres 40A.

Dans les exemples représentés, les deuxièmes pattes de pré-montage présentent des sections transversales plates. On pourrait toutefois également prévoir qu'elles présentent des sections transversales légèrement convexes, pour s'adapter à la courbure de la surface d'appui 18 du deuxième tube avec laquelle elles coopèrent. Elles pourraient même présenter une convexité plus marquée, ce qui leur conférerait une certaine rigidité.

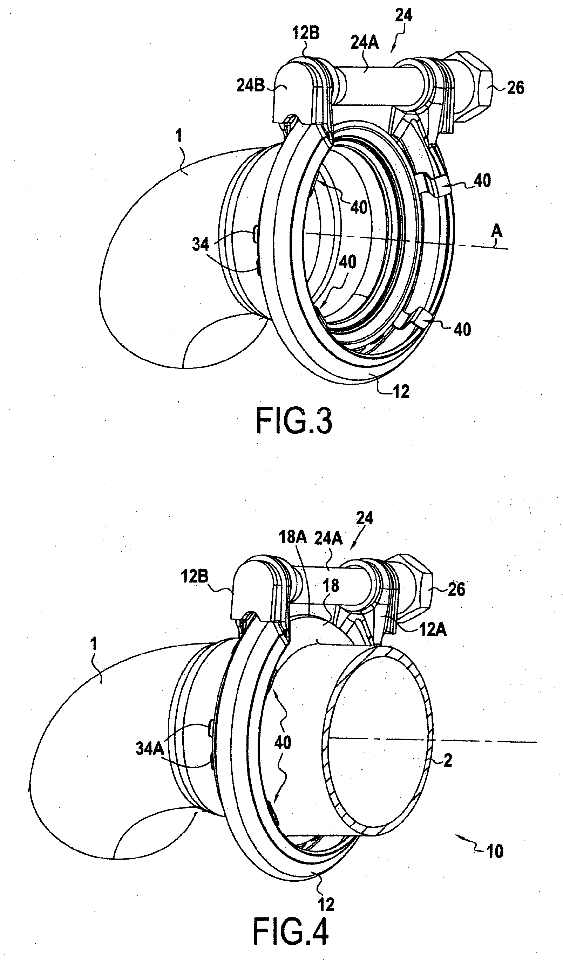

Les figures 3 à 5 montrent différentes étapes de l'assemblage du système de serrage avec les tubes. Sur la figure 3, qui correspond à l'état représenté sur les figures 1A et 1B, le collier est à l'état non serré, la rondelle 28 étant fixée par rapport à ce collier, et l'ensemble constitué par le collier et la rondelle est pré-monté à l'extrémité du premier tube 1. Les deuxièmes pattes de pré-montage 40 sont dirigées du côté du collier allant en s'éloignant du premier tube 1. On comprend que, pour pré-monter le deuxième tube, il suffit d'emmancher celui-ci à l'intérieur du collier, à l'occasion de quoi le sommet 18A de la surface d'appui 18 coopère avec les deuxièmes pattes de pré-montage 40 pour les faire fléchir vers l'extérieur. De par leur élasticité, ces pattes ont ensuite tendance à se rabattre, une fois que le deuxième tube est parvenu en position. En particulier, lorsque les deuxièmes pattes de pré-montage sont formées par les pattes pré-déformées 40 qui ont été décrites, le passage du sommet 18A de la surface d'appui 18 du deuxième tube à la jonction entre les tronçons de retenue 43 et les tronçons de solidarisation 42, provoque l'écartement élastique radial des pattes 40, jusqu'à ce que le sommet 18A vienne se loger sensiblement à la jonction entre les tronçons de rattachement 41 et les tronçons de solidarisation 42, permettant alors que les pattes 40 se rabattent légèrement vers l'intérieur sous l'effet de leur élasticité propre, retenant ainsi le deuxième tube vis-à-vis d'un arrachement dans le sens allant en s'éloignant du premier tube.

La figure 4 montre la situation alors que le deuxième tube est ainsi pré-monté, le collier n'étant toujours pas serré. On voit que les extrémités libres 40A des pattes 40 sont visibles à l'extérieur de la bande du collier. Dans cet état, les deux tubes sont pré-assemblés à l'aide du système de serrage qui les maintient dans cette position. Ainsi, le serrage du collier peut être réalisé avec toute l'attention requise, sans qu'il soit nécessaire de prendre garde, en même temps, au correct positionnement des tubes l'un par rapport à l'autre.

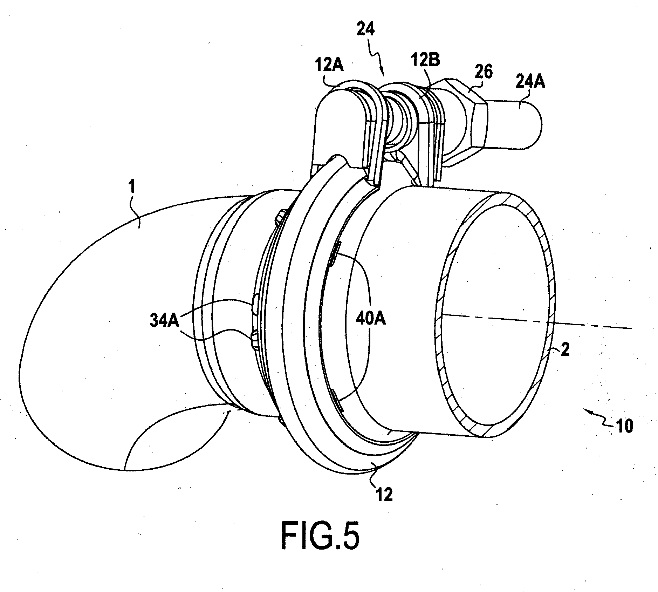

Sur la figure 5, le collier est serré, et ce serrage a provoqué la déformation des pattes 40, qui sont venues se plaquer contre la périphérie interne de la bande 12, en s'escamotant pratiquement totalement à l'intérieur du renfoncement 14 de cette bande. Le montage est analogue si l'on utilise les rondelles des figures 7A à 7C à ceci près que, dans le cas des figures 7A et 7C, les extrémités des pattes 40 restent davantage visibles à l'extérieur du collier.

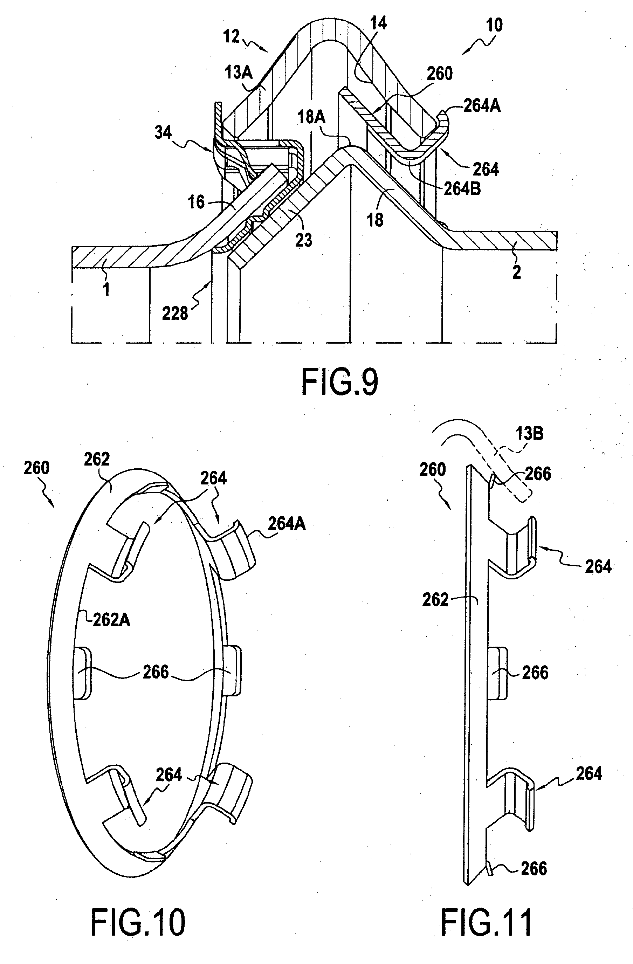

On décrit maintenant les figures 9 à 11 qui montrent un autre mode de réalisation, utilisant une rondelle supplémentaire. La rondelle 228 représentée sur la figure 9 est analogue à la rondelle 28 qui a été précédemment décrite, à ceci près qu'elle ne comporte pas les deuxièmes pattes de pré-montage. En effet, les deuxièmes moyens de pré-montage sont réalisés sur une rondelle supplémentaire 260 qui est solidarisée avec la deuxième aile 13B de la bande 12 du collier.

En l'espèce, comme on le voit sur la figure 10, la rondelle supplémentaire 260 présente une portion tronconique 262 s'étendant radialement vers l'intérieur tout au plus jusqu'au niveau du sommet 18A de la surface d'appui 18, lorsque le deuxième tube est inséré dans le renfoncement 14 ménagé à l'intérieur de la bande.

Les deuxièmes pattes de pré-montage équipent la rondelle 260. Elles comprennent des pattes 264 qui s'étendent vers l'intérieur à partir de la périphérie interne 262A de la portion tronconique 262, et qui sont ensuite recourbées vers l'extérieur de manière à venir se retenir contre le bord libre interne de la deuxième aile 13B de la bande 12.

Les deuxièmes pattes de pré-montage comprennent également des pattes d'entretoisement 266, qui sont dirigées sensiblement axialement, ou bien légèrement redressées, de manière à venir en appui contre la périphérie interne de la deuxième aile 13B comme illustré sur la figure 11, sur laquelle l'aile 13b du collier est représentée en traits fantômes pour la clarté de l'explication. L'extrémité libre des pattes 264 est recourbée en 264A pour venir reposer contre la périphérie externe de la deuxième aile 13B. Ainsi, la rondelle supplémentaire 260 est maintenue par rapport à la deuxième aile 13B du collier par le phénomène d'action/réaction des pattes d'entretoisement 266 et des crochets 264A, et les pattes 264 servent au pré-montage du deuxième tube 2, leurs zones d'inflexion 264B délimitant, au repos, un diamètre inférieur au diamètre du sommet 18A de la surface d'appui 18 du deuxième tube. Les pattes 264 et 266 sont également déformables pour d'une part servir au pré-montage du deuxième tube par rapport au système de serrage et, d'autre part, ne pas s'opposer au serrage.

## Revendications

1. Système de serrage pour le raccordement d'un premier et d'un deuxième tube (1, 2) dont les extrémités en regard présentent des surfaces d'appui (16, 18) faisant saillie par rapport à la surface extérieure cylindrique desdits tubes, le système comprenant un collier (10) et une rondelle (28 ; 128 ; 128'), le collier comportant une bande (12) apte à coopérer avec lesdites surfaces d'appui par sa périphérie intérieure délimitant un renfoncement (14) dans lequel les surfaces d'appui peuvent être insérées et des moyens pour serrer ladite bande (12A, 12B, 24, 26), la rondelle (28 ; 128 ; 128') étant solidarisée avec le collier par des moyens de fixation (33, 34) et présentant une portion d'étanchéité (30) apte à être prise entre deux surfaces d'étanchéité appartenant respectivement au premier et au deuxième tube lorsque le système est serré sur les tubes, le collier et la rondelle constituant un ensemble qui peut être pré-monté sur le premier tube et le système comprenant des premiers moyens de pré-montage (38) pour, à l'état non serré du collier, solidariser ledit collier avec le premier tube lorsque la surface d'appui (16) dudit premier tube est engagée dans le renfoncement (14), et des deuxièmes moyens de pré-montage (40) pour, alors que le collier (10) est solidarisé avec le premier tube (1) par les premiers moyens de pré-montage (38), solidariser ledit collier avec le deuxième tube (2) lorsque la surface d'appui (18) dudit deuxième tube (2) est également engagée dans le renfoncement (14),
**caractérisé en ce que** les moyens de fixation comprennent des pattes de fixation (33, 34) déformables qui sont solidaires de la rondelle et sont situées d'un premier côté d'une surface de la rondelle (28 ; 128 ; 128'), les premiers moyens de pré-montage comprennent des premières pattes de pré-montage (38) déformables aptes à coopérer avec le premier tube, lesdites premières pattes de pré-montage (38) étant également solidaires de la rondelle et situées du premier côté de la rondelle (28 ; 128 ; 128'), et les deuxièmes moyens de pré-montage (40) comprennent des deuxièmes pattes de pré-montage déformables aptes à coopérer avec le deuxième tube, lesdites deuxièmes pattes de pré-montage étant situées d'un deuxième côté de la rondelle, opposé au premier côté, et **en ce que** les deuxièmes pattes de pré-montage (40) comprennent au moins une patte pré-déformée (40) qui présente, en section axiale, un tronçon (41) de rattachement à la rondelle (28) qui s'étend vers l'extérieur à partir de la rondelle, et un tronçon de solidarisation (42) avec le deuxième tube, qui s'étend entre le tronçon de rattachement (41) et une extrémité libre (40A) de ladite patte pré-déformée en étant dirigé vers l'intérieur dans le sens allant vers ladite extrémité libre.

2. Système de serrage selon la revendication 1, **caractérisé en ce que** la patte pré-déformée (40) présente, en outre, un tronçon de retenue (43), qui s'étend entre le tronçon (42) de solidarisation avec le deuxième tube (2) et l'extrémité libre (40A) de la patte pré-déformée, en étant dirigé vers l'extérieur dans le sens allant vers ladite extrémité libre, ledit tronçon de retenue (43) étant apte à coopérer avec la bande du collier pour retenir la patte pré-déformée par rapport à cette bande.

3. Système de serrage selon la revendication 1 ou 2, **caractérisé en ce que** la patte pré-déformée (40) comporte un crochet (44') apte à s'accrocher sur une portion de sommet (12') de la bande de collier (12).

4. Système de serrage selon l'une quelconque des revendications 1 à 3, **caractérisé en ce que** les deuxièmes pattes de pré-montage comprennent au moins une patte (40) dont la largeur est sensiblement constante.

5. Système de serrage selon l'une quelconque des revendications 1 à 4, **caractérisé en ce que** les deuxièmes pattes de pré-montage comprennent au moins une patte (40) dont la largeur diminue dans le sens allant vers son extrémité libre.

6. Système de serrage selon l'une quelconque des revendications 1 à 5, **caractérisé en ce que** la rondelle (28 ; 128 ; 128' ; 228) comprend une portion annulaire d'étanchéité (30), apte à être prise entre une première et une deuxième surface d'étanchéité (17, 23) appartenant respectivement au premier et au deuxième tube (1, 2), lorsque ces derniers sont serrés à l'aide du système de serrage.

7. Système de serrage selon l'une quelconque des revendications 1 à 6, **caractérisé en ce que** la rondelle (28 ; 128 ; 128' ; 228) présente une portion sensiblement tronconique (30).

8. Système de serrage selon l'une quelconque des revendications 1 à 7, **caractérisé en ce que** la rondelle (128; 128') présente une portion interne (50) s'étendant sensiblement axialement.

9. Système de serrage selon les revendications 7 et 8, **caractérisé en ce que** la portion interne (50) s'étend à partir d'un bord interne (30A) de la portion sensiblement tronconique (30) en formant un retour.

## Patentansprüche

1. Klemmsystem zur Verbindung eines ersten und eines zweiten Rohrs (1,2), deren gegenüberliegende Enden Anlageflächen (16, 18) aufweisen, die gegenüber der zylindrischen Außenfläche der Rohre vorspringen, wobei das System eine Schelle (10) und eine Unterlegscheibe (28; 128; 128') umfasst, wobei die Schelle ein Band (12), das geeignet ist, durch seinen Innenumfang, welcher eine Vertiefung (14) begrenzt, in die die Anlageflächen eingefügt werden können, mit den Anlageflächen zusammenzuwirken, sowie Mittel zum Festziehen des Bandes (12A, 12B, 24, 26) umfasst, wobei die Unterlegscheibe (28; 128, 128') mit der Schelle durch Befestigungsmittel (33, 34) fest verbunden ist und einen Dichtungsabschnitt (30) aufweist, der geeignet ist, zwischen zwei Dichtungsflächen, die zu dem ersten bzw. zu dem zweiten Rohr gehören, genommen zu werden, wenn das System an den Rohren festgezogen ist, wobei die Schelle und die Unterlegscheibe eine Anordnung bilden, die an dem ersten Rohr vormontiert werden kann, und wobei das System erste Vormontagemittel (38) umfasst, um im nicht festgezogenen Zustand der Schelle die Schelle mit dem ersten Rohr fest zu verbinden, wenn die Anlagefläche (16) des ersten Rohrs in die Vertiefung (14) eingesteckt ist, sowie zweite Vormontagemittel (40), um-während die Schelle (10) mit dem ersten Rohr (1) durch die ersten Vormontagemittel (38) fest verbunden ist - die Schelle mit dem zweiten Rohr (2) fest zu verbinden, wenn die Anlagefläche (18) des zweiten Rohrs (2) ebenfalls in die Vertiefung (14) eingesteckt ist,
**dadurch gekennzeichnet, dass** die Befestigungsmittel verformbare Befestigungslaschen (33, 34) umfassen, die mit der Unterlegscheibe fest verbunden und auf einer ersten Seite einer Fläche der Unterlegscheibe (28, 128, 128') gelegen sind, die ersten Vormontagemittel erste verformbare Vormontagelaschen (38), die geeignet sind, mit dem ersten Rohr zusammenzuwirken, umfassen, wobei die ersten Vormontagelaschen (38) ebenfalls mit der Unterlegscheibe fest verbunden und auf der ersten Seite der Unterlegscheibe (28; 128; 128') gelegen sind, und die zweiten Vormontagemittel (40) zweite verformbare Vormontagelaschen, die geeignet sind, mit dem zweiten Rohr zusammenzuwirken, umfassen, wobei die zweiten Vormontagelaschen auf einer zu der ersten Seite entgegengesetzten zweiten Seite der Unterlegescheibe gelegen sind, und dass die zweiten Vormontagelaschen (40) wenigstens eine vorverformte Lasche (40) umfassen, die im Axialschnitt einen Abschnitt (41) zum Anschließen an die Unterlegscheibe (28), der sich von der Unterlegscheibe aus nach außen erstreckt, und einen Abschnitt zum festen Verbinden (42) mit dem zweiten Rohr umfasst, der sich zwischen dem Anschlussabschnitt (41) und einem freien Ende (40A) der vorverformten Lasche erstreckt und dabei in der zu dem freien Ende hin verlaufenden Richtung nach innen gerichtet ist.

2. Klemmsystem nach Anspruch 1, **dadurch gekennzeichnet, dass** die vorverformte Lasche (40) ferner einen Halteabschnitt (43) umfasst, der sich zwischen dem Abschnitt (42) zum festen Verbinden mit dem zweiten Rohr (2) und dem freien Ende (40A) der vorverformten Lasche erstreckt und dabei in der zu dem freien Ende hin verlaufenden Richtung nach außen gerichtet ist, wobei der Halteabschnitt (43) geeignet ist, mit dem Band der Schelle zusammenzuwirken, um die vorverformte Lasche gegenüber diesem Band zu halten.

3. Klemmsystem nach Anspruch 1 oder 2, **dadurch gekennzeichnet, dass** die vorverformte Lasche (40) einen Haken (44') umfasst, der geeignet ist, sich an einem Scheitelabschnitt (12') des Schellenbandes (12) festzuhaken.

4. Klemmsystem nach einem der Ansprüche 1 bis 3, **dadurch gekennzeichnet, dass** die zweiten Vormontagelaschen wenigstens eine Lasche (40) umfassen, deren Breite im Wesentlichen konstant ist.

5. Klemmsystem nach einem der Ansprüche 1 bis 4, **dadurch gekennzeichnet, dass** die zweiten Vormontagelaschen wenigstens eine Lasche (40) umfassen, deren Breite in der zu ihrem freien Ende hin verlaufenden Richtung abnimmt.

6. Klemmsystem nach einem der Ansprüche 1 bis 5, **dadurch gekennzeichnet, dass** die Unterlegscheibe (28; 128; 128'; 228) einen ringförmigen Dichtungsabschnitt (30) umfasst, der geeignet ist, zwischen eine erste und eine zweite Dichtungsfläche (17, 23), die zu dem ersten bzw. zu dem zweiten Rohr (1, 2) gehören, genommen zu werden, wenn letztere mit Hilfe des Klemmsystems festgeklemmt sind.

7. Klemmsystem nach einem der Ansprüche 1 bis 6, **dadurch gekennzeichnet, dass** die Unterlegscheibe (28; 128; 128'; 228) einen im Wesentlichen kegelstumpfförmigen Abschnitt (30) aufweist.

8. Klemmsystem nach einem der Ansprüche 1 bis 7, **dadurch gekennzeichnet, dass** die Unterlegscheibe (128; 128') einen sich im Wesentlichen axial erstreckenden Innenabschnitt (50) aufweist.

9. Klemmsystem nach den Ansprüchen 7 und 8, **dadurch gekennzeichnet, dass** der Innenabschnitt (50) sich von einem Innenrand (30A) des im Wesentlichen kegelstumpfförmigen Abschnitts (30) aus unter Bildung eines Rücklaufs erstreckt.

## Claims

1. A clamping system for connecting together a first tube (1) and a second tube (2), the facing ends of the tubes having bearing surfaces (16, 18) that project relative to the cylindrical outside surfaces of said tubes, the system comprising a collar (10) and a washer (28; 128; 128'), the collar having a band (12) suitable for co-operating with said bearing surfaces via its inside periphery defining a setback (14) into which the bearing surfaces can be inserted, and means for tightening said band (12A, 12B, 24, 26), the washer (28; 128; 128') being secured to the collar by fastening means (33, 34) and presenting a sealing portion (30) suitable for being sandwiched between two sealing surfaces belonging respectively to the first tube and to the second tube when said tubes are clamped by means of the clamping system, the collar and the washer forming an assembly which can be pre-fitted onto the first tube, and the system comprising first pre-fitting means (38) for acting when the collar is in the non-tightened state to secure said collar to the first tube when the bearing surface (16) of said first tube is engaged in the setback (14), and second pre-fitting means (40) for acting, when the collar (10) is secured to the first tube (1) by the first pre-fitting means (38), to secure said collar to the second tube (2) when the bearing surface (18) of said second tube (2) is also engaged in the setback (14),
**characterized in that** the fastening means comprise deformable fastening tabs (33, 34) that are integral with the washer and are situated on a first side of a surface of the washer (28; 128; 128'), the first pre-fitting means comprise first deformable pre-fitting tabs (38) suitable for co-operating with the first tube (1), said first pre-fitting tabs (38) being also integral with the washer and being situated on the first side of the washer (28; 128; 128'), and the second pre-fitting means (40) comprise second deformable pre-fitting tabs suitable for co-operating with the second tube (2), said second pre-fitting tabs being situated on a second side of the washer that is opposite from first side, and **in that** the second pre-fitting tabs (40) comprise at least one pre-deformed tab (40) that, in axial section, has a joining segment (41) joining to the washer (28) and that extends outwards from the washer, and a securing segment (42) for securing to the second tube and that extends between the joining segment (41) and a free end (40A) of said pre-deformed tab while pointing inwards in the direction going towards said free end.

2. A clamping system according to claim 1, **characterized in that** the pre-deformed tab (40) further comprises a retaining segment (43) that extends between the securing segment (42) for securing to the second tube (2) and the free end (40A) of the pre-deformed tab, while pointing outwards in the direction going towards said free end, said retaining segment (43) being suitable for co-operating with the band of the collar so as to retain the pre-deformed tab relative to said band.

3. A clamping system according to claim 1 or claim 2, **characterized in that** the pre-deformed tab (40) is provided with a hook (44') suitable for hooking onto a vertex portion (12') of the collar band (12).

4. A clamping system according to any one of claims 1 to 3, **characterized in that** the second pre-fitting means comprise at least one tab (40) that is of substantially constant width.

5. A clamping system according to any one of claims 1 to 4, **characterized in that** the second pre-fitting means comprise at least one tab (40) that is of width that decreases in the direction going towards its free end.

6. A clamping system according to any one of claims 1 to 5, **characterized in that** the washer (28; 128; 128'; 228) includes an annular sealing portion (30) suitable for being sandwiched between first and second sealing surfaces (17, 23) belonging respectively to the first tube (1) and to the second tube (2), when said tubes are clamped by means of the clamping system.

7. A clamping system according to any one of claims 1 to 6, **characterized in that** the washer (28; 128; 128'; 228) has a substantially frustoconical portion (30).

8. A clamping system according to any one of claims 1 to 7, **characterized in that** the washer (128; 128') has an inside portion (50) that extends substantially axially.

9. A clamping system according to claim 7 or claim 8, **characterized in that** the inside portion (50) extends from an inside edge (30A) of the substantially frustoconical portion (30) by forming a turned-back segment.
